# EUROPEAN PATENT SPECIFICATION

(11) **EP 4 261 093 B1**
(45) Date of publication and mention of the grant of the patent: **11.09.2024**
(21) Application number: 23164504.5
(22) Date of filing: 28.03.2023
(51) Int. Cl.: B60W 50/02, B60W 50/029, B60W 50/032, B60W 60/00, G08G 1/00, B60W 30/18

(54) **METHOD COMPRISING THE DETECTION OF AN ABNORMAL OPERATIONAL STATE OF AN AUTONOMOUS VEHICLE**
VERFAHREN ENTHALTEND EINE DETEKTION EINES ABNORMALEN BETRIEBSZUSTANDS EINES AUTONOMEN FAHRZEUGS
PROCÉDÉ COMPRENANT LA DÉTECTION D'UN ÉTAT DE FONCTIONNEMENT ANORMAL D'UN VÉHICULE AUTONOME

(30) Priority: 14.04.2022 US 202263331091 P
(43) Date of publication of application: 18.10.2023
(60) Divisional application: 24193460.3
(73) Proprietor: TuSimple, Inc., San Diego, CA 92122 (US)
(72) Inventor: WHITE, Leon M., San Diego, 92122 (US)
(74) Representative: Morrall, Jonathan Ian McLachlan

(56) References cited:
- EP-A1- 3 232 286
- US-A1- 2020 307 633
- US-A1- 2021 327 173
- US-A1- 2022 081 005

## Description

### TECHNICAL FIELD

The present invention relates generally to autonomous vehicles. More particularly, the present invention is related to the detection of abnormal operational states for autonomous vehicles (AVs).

### BACKGROUND

One aim of autonomous vehicle technologies is to provide vehicles that can safely navigate towards a destination with limited or no driver assistance. The safe navigation of an AV from one point to another may include the ability to signal other vehicles, navigating around other vehicles in shoulders or emergency lanes, changing lanes, biasing appropriately in a lane, and navigate all portions or types of highway lanes. Autonomous vehicle technologies may enable an AV to operate without requiring extensive learning or training by surrounding drivers, by ensuring that the AV can operate safely, in a way that is evident, logical, or familiar to surrounding drivers and pedestrians.

Manually operated vehicles including manually driven tractor trailers generally rely upon the driver to identify an instance where an abnormal event has occurred. For example, an abnormal event may include an unexpected object in the road, vehicle hardware failure, etc. The driver may identify the abnormal event and may then take action, such as pulling over to the side of the road, driving to a mechanic shop, etc.

With the advent of autonomous vehicles including autonomous tractor trailers, a driver is no longer onboard the autonomous vehicle so as to identify abnormal events and to take appropriate action. However, autonomous vehicles still have the possibility of experiencing such abnormal and an autonomous vehicle that does experience such an event should still take appropriate action in order to continue to safely operate.
EP3232286 A1 discloses a method for safety stoppage of an autonomous road vehicle having a localization system and sensors for monitoring the vehicle surroundings and motion, and a signal processing system for processing sensor signals enabling an autonomous drive mode thereof.

### SUMMARY

The invention provides a control system of an autonomous vehicle as defined in independent claim 1 as well as a method as defined in independent claim 6. Features of preferred embodiments are defined in the dependent claims.

### BRIEF DESCRIPTION OF THE DRAWINGS

For a more complete understanding of the invention, reference is now made to the following brief description, taken in connection with the accompanying drawings and detailed description, wherein like reference numerals represent like parts.
FIG. 1 illustrates an example communication system that can be used to practice embodiments of the present invention.
FIG. 2 illustrates a block diagram of a control subsystem in accordance with some embodiments of the invention;
FIG. 3 illustrates a block diagram of an operational subsystem in accordance with some embodiments of the invention;
FIG. 4 illustrates a diagram of an example autonomous vehicle configured to implement autonomous driving operations in accordance with some embodiments of the invention;
FIG. 5 illustrates a diagram of an in-vehicle control computer included in an AV in accordance with some embodiments of the invention;
FIG. 6 is a flowchart diagram of an example process for identifying one or more abnormal operational states and performing a safety maneuver as performed by, for example, a control subsystem in accordance with some embodiments of the invention; and
FIG. 7 is a flowchart diagram of an example process for identifying one or more abnormal operational states and causing an instruction signal to be provided to an AV as performed by, for example, an operational subsystem in accordance with some embodiments of the invention;
FIG. 8 is a flowchart diagram of an example process for detecting one or more discrepancies using one or more image processing models in accordance with the invention.

### DETAILED DESCRIPTION

During operation, AVs may encounter conditions which necessitate a safety maneuver to be performed. For example, an AV may encounter unexpected objects on a road segment which are not described in a stored operational defined domain (ODD). As another example, an AV may experience equipment malfunction and/or failure, such as a camera malfunction. In order to continue operation in a safe manner, the AV may perform a safety maneuver with respect to a safety location and within a time window. For example, the AV may pull off to the side of the road or may continue to a rescue center to receive assistance. Furthermore, an operational subsystem may dispatch one or more rescue vehicles to assist the AV at the safety location. For example, the one or more rescue vehicles may bring replacement hardware for the AV and/or may provide a driver to manually operate the AV. Alternatively, a mobile rescue center which is configured with the operational subsystem may assist the AV at the safety location.

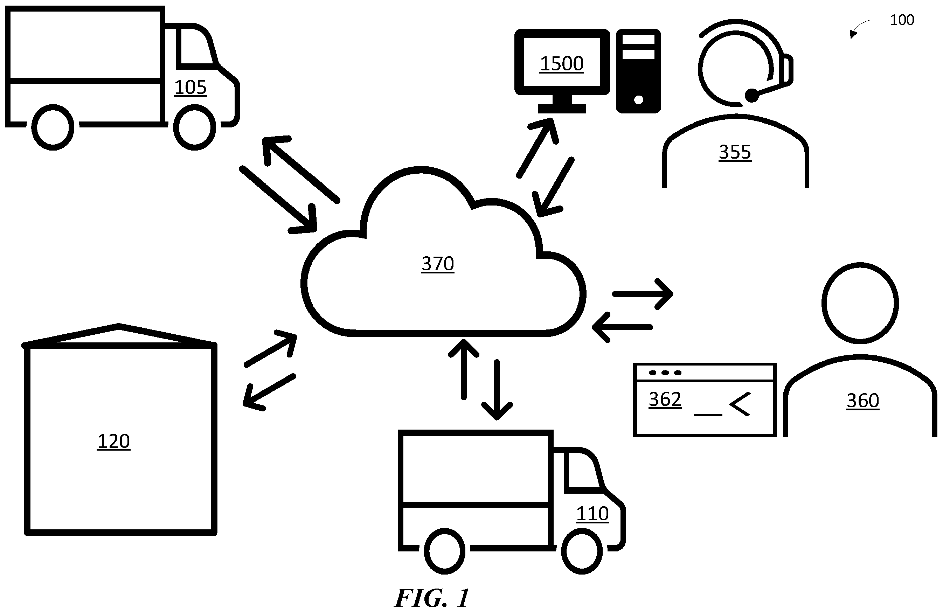

FIG. 1 illustrates an example system 100 that includes one or more AVs 105, a mobile rescue center 110, a rescue center 120, an operational subsystem 1500 with a human operator 355, and an interface 362 for third-party 360 interaction. A human operator 355 may also be known as a remoter center operator (RCO). Communications between the AVs 105, mobile rescue center 110, rescue center 120, operational subsystem 1500 and user interface 362 take place over a network 370. In some instances, where not all the AVs 105 in a fleet are able to communicate with the operational subsystem 1500, the AVs 105 may communicate with each other over the network 370 or directly. Furthermore, each AV 105 may communicate with a mobile rescue center 110 and/or rescue center 120 directly. Each AV 105 may include an in-vehicle control computer (VCU) which enables a module for network communications. In some embodiments, an AV 105 may be a semi-truck tractor unit that attaches to a trailer to transport cargo or freight. However, as will be appreciated by one of skill in the art, the AV 105 may be embodied by any autonomous vehicle such as a car, truck, drone, water vessel, and/or the like.

An autonomous vehicle may be in communication with an operational subsystem 1500. In some embodiments, the operational subsystem 1500 may be associated with the rescue center 120. In some embodiments, the operational subsystem 1500 may be associated with the mobile rescue center 110. The operational subsystem may serve many purposes, including: tracking the progress of one or more autonomous vehicles (e.g., an autonomous truck), tracking the progress of a fleet of autonomous vehicles; sending maneuvering instructions to one or more autonomous vehicles; monitoring the health of the autonomous vehicle(s), monitoring the status of the cargo of each autonomous vehicle in contact with the operational subsystem, facilitate communications between third parties (e.g., law enforcement, clients whose cargo is being carried) and each, or a specific, autonomous vehicle; allow for tracking of specific autonomous trucks in communication with the operational subsystem (e.g., third-party tracking of a subset of vehicles in a fleet), arranging maintenance service for the autonomous vehicles (e.g., oil changing, fueling, maintaining the levels of other fluids), alerting an affected autonomous vehicle of changes in traffic or weather that may adversely impact a route or delivery plan, pushing over the air updates to autonomous trucks to keep all components up to date, and other purposes or functions that improve the safety for the autonomous vehicle, its cargo, and/or its surroundings. An operational subsystem may also determine performance parameters of an autonomous vehicle or autonomous truck, including any of: data logging frequency, compression rate, location, data type; communication prioritization; how frequently to service the autonomous vehicle (e.g., how many miles between services); when to perform a minimal risk condition (MRC) maneuver while monitoring the vehicle's progress during the maneuver; when to hand over control of the autonomous vehicle to a human driver (e.g., at a destination yard); ensuring an autonomous vehicle passes pre-trip inspection; ensuring an autonomous vehicle performs or conforms to legal requirements at checkpoints and weight stations; ensuring an autonomous vehicle performs or conforms to instructions from a human at the site of a roadblock, cross-walk, intersection, construction, or accident; and/or the like.

To allow for communication between autonomous vehicles in a fleet and an operational subsystem or command center, each autonomous vehicle may be equipped with a communication gateway. The communication gateway may have the ability to do any of the following: allow for AV to operational subsystem communication (i.e. V2C) and the operational subsystem to AV communication (C2V); allow for AV to AV communication within the fleet (V2V); transmit the availability or status of the communication gateway; acknowledge received communications; ensure security around remote commands between the AV and the operational subsystem; convey the AV's location reliably at set time intervals; enable the operational subsystem to ping the AV for location and vehicle health status; allow for streaming of various sensor data directly to the command or operational subsystem; allow for automated alerts between the AV and operational subsystem; comply to International Organization for Standardization (ISO) 21434 standards; and the like.

In some embodiments, the rescue center 120 may be a brick and mortar location that is equipped with diagnostic equipment, repair equipment, hardware, rescue center operators and/or the like. The rescue center 120 may be associated with the operational subsystem 1500 such that the rescue center 120 hosts associated operational subsystem 1500 equipment and/or the like. The rescue center 120 may be configured to house one or more AVs within the facility such as within one or more docks, bays, parking spots, etc.

In some embodiments, the mobile rescue center 110 may be a vehicle that may be manually or semi-autonomously operated by one or more rescue center operators. In some embodiments, the mobile rescue center may be autonomously operated. The mobile rescue center may be equipped with diagnostic equipment, replacement hardware, and/or the like such that the mobile rescue center may diagnose and/or provide equipment to the AV 105 in the event an abnormal operational state is detected and the AV has performed a safety maneuver. In some embodiments, the mobile rescue center may transport drivers to the AV 105 such that AV 105 may be operated manually and/or semi-autonomously. In some embodiments, the mobile rescue center may serve as an operational subsystem. The mobile rescue center 110 may be associated with the operational subsystem 1500 such that the mobile rescue center 110 hosts associated operational subsystem 1500 equipment and/or the like.

An operational subsystem 1500 or command center may be operated by one or more human, also known as an operator and/or a remote center operator. The operator may set thresholds for autonomous vehicle health parameters, so that when an autonomous vehicle meets or exceeds the threshold, precautionary action may be taken. Examples of vehicle health parameters for which thresholds may be established by an operator may include any of: fuel levels; oil levels; miles traveled since last maintenance; low tire-pressure detected; cleaning fluid levels; brake fluid levels; responsiveness of steering and braking subsystems; Diesel exhaust fluid (DEF) level; communication ability (e.g., lack of responsiveness); positioning sensors ability (e.g., GPS, IMU malfunction); impact detection (e.g., vehicle collision); perception sensor ability (e.g., camera, LIDAR, radar, microphone array malfunction); computing resources ability (e.g., VCU or ECU malfunction or lack of responsiveness, temperature abnormalities in computing units); angle between a tractor and trailer in a towing situation (e.g., tractor-trailer, 18-wheeler, or semi-truck); unauthorized access by a living entity (e.g., a person or an animal) to the interior of an autonomous truck; and the like. The precautionary action may include execution of a minimal risk condition (MRC) maneuver, seeking service, or exiting a highway or other such re-routing that may be less taxing on the autonomous vehicle. An autonomous vehicle whose system health data meets or exceeds a threshold set at the operational subsystem or by the operator may receive instructions that are automatically sent from the operational subsystem to perform the precautionary action.

The remote center operator may be made aware of situations affecting one or more autonomous vehicles in communication with or being monitored by the operational subsystem that the affected autonomous vehicle(s) may not be aware of. Such situations may include: irregular or sudden changes in traffic flow (e.g., traffic jam or accident); abrupt weather changes; abrupt changes in visibility; emergency conditions (e.g., fire, sink-hole, bridge failure); power outage affecting signal lights; unexpected road work; large or ambiguous road debris (e.g., object unidentifiable by the autonomous vehicle); law enforcement activity on the roadway (e.g., car chase or road clearing activity); and the like. These types of situations that may not be detectable by an autonomous vehicle may be brought to the attention of the operational subsystem operator through traffic reports, law enforcement communications, data from other vehicles that are in communication with the operational subsystem, reports from drivers of other vehicles in the area, and similar distributed information venues. An autonomous vehicle may not be able to detect such situations because of limitations of sensor systems or lack of access to the information distribution means (e.g., no direct communication with weather agency). An operator at the operational subsystem may push such information to affected autonomous vehicles that are in communication with the operational subsystem. The affected autonomous vehicles may proceed to alter their route, trajectory, or speed in response to the information pushed from the operational subsystem. In some instances, the information received by the operational subsystem may trigger a threshold condition indicating that MRC (minimal risk condition) maneuvers are warranted; alternatively, or additionally, an operator may evaluate a situation and determine that an affected autonomous vehicle should perform a MRC maneuver and subsequently send such instructions to the affected vehicle. In these cases, each autonomous vehicle receiving either information or instructions from the operational subsystem or the operational subsystem operator uses its on-board computing unit (i.e. VCU) to determine how to safely proceed, including performing a MRC maneuver that includes pulling-over or stopping.

An operational subsystem 1500 or command center may allow a third party to interact with the operational subsystem operator, with an autonomous truck, or with both the human system operator and an autonomous truck. A third party may be a customer whose goods are being transported, a law enforcement or emergency services provider, or a person assisting the autonomous truck when service is needed. In its interaction with a third party, the operational subsystem may recognize different levels of access, such that a customer concerned about the timing or progress of a shipment may only be allowed to view status updates for an autonomous truck, or may able to view status and provide input regarding what parameters to prioritize (e.g., speed, economy, maintaining originally planned route) to the operational subsystem. By providing input regarding parameter prioritization to the operational subsystem, a customer can influence the route and/or operating parameters of the autonomous truck.

### Exemplary Control Subsystem

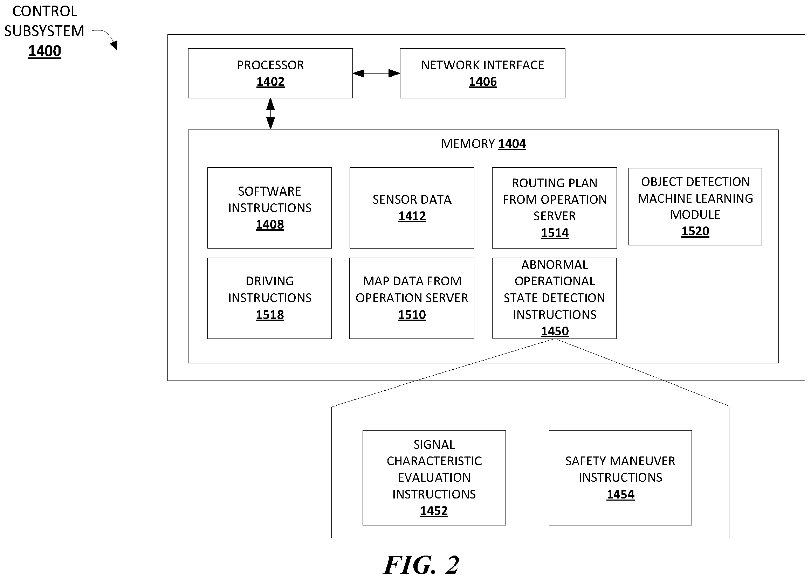

FIG. 2 illustrates an embodiment of the control subsystem 1400. The control subsystem 1400 includes at least one processor 1402, at least one memory 1404, and at least one network interface 1406. The control subsystem 1400 may be configured as shown or in any other suitable configuration.

The processor 1402 may comprise one or more processors operably coupled to the memory 1404. The processor 1402 is any electronic circuitry including, but not limited to, state machines, one or more central processing unit (CPU) chips, logic units, cores (e.g. a multi-core processor), field-programmable gate array (FPGAs), application specific integrated circuits (ASICs), or digital signal processors (DSPs). The processor 1402 may be a programmable logic device, a microcontroller, a microprocessor, or any suitable combination of the preceding. The processor 1402 is communicatively coupled to and in signal communication with the memory 1404 and the network interface 1406. The one or more processors are configured to process data and may be implemented in hardware or software. For example, the processor 1402 may be 8-bit, 16-bit, 32-bit, 64-bit or of any other suitable architecture. The processor 1402 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute instructions to implement the functions disclosed herein, such as some or all of those described with respect to FIGS. 1-8. In some embodiments, the function described herein is implemented using logic units, FPGAs, ASICs, DSPs, or any other suitable hardware or electronic circuitry.

The memory 1404 is operable to store any of the information described below along with any other data, instructions, logic, rules, or code operable to implement the function(s) described herein when executed by processor 1402. For example, the memory 1404 may store software instructions 1408, sensor data 1412 received from the sensors 1646, drive subsystem 1642, and/or control subsystem 1648 of the AV 105, map data 1510, routing plan 1514, driving instructions 1518, and/or any other data/instructions described herein. The memory 1404 may further store abnormal operational state detection instructions 1450, which may be configured to determine signal characteristic evaluation instructions 1452 and safety maneuver instructions 1454. The memory 1404 comprises one or more disks, tape drives, or solid-state drives, and may be used as an over-flow data storage device, to store programs when such programs are selected for execution, and to store instructions and data that are read during program execution. The memory 1404 may be volatile or non-volatile and may comprise read-only memory (ROM), random-access memory (RAM), ternary content-addressable memory (TCAM), dynamic random-access memory (DRAM), and static random-access memory (SRAM).

The network interface 1406 is configured to enable wired and/or wireless communications. The network interface 1406 is configured to communicate data between the control subsystem 1400 and other network devices, systems, or domain(s). For example, the network interface 1406 may comprise a WIFI interface, a local area network (LAN) interface, a wide area network (WAN) interface, a modem, a switch, or a router. The processor 1402 is configured to send and receive data using the network interface 1406. The network interface 1406 may be configured to use any suitable type of communication protocol.

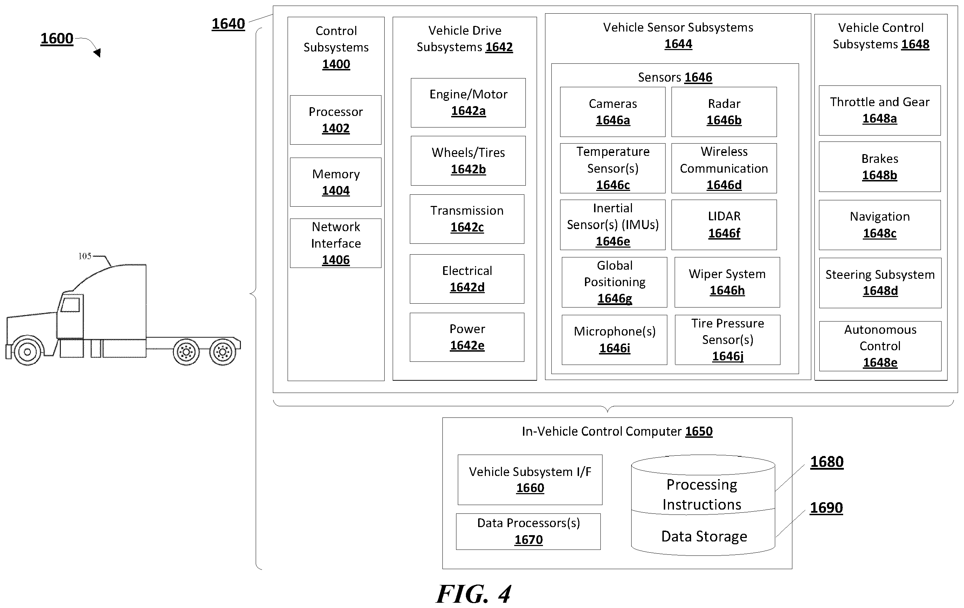

In one embodiment, the control subsystem 1400 may be a subsystem of the in-vehicle control computer system 1650 (See FIG. 4). The control subsystem 1400 may be implemented by one or more computing devices that may serve to detect one or more abnormal operational states. The control subsystem 1400 is in signal communication with the in-vehicle control computer system 1650 (and its components) and the operational subsystem 1500.

In some embodiments, the signal characteristic instructions 1452 may be configured to provide instructions regarding the evaluation of signals received from one or more sensors of the AV 105. The instructions may be indicative of one or more signal characteristic thresholds to compare each evaluated signal characteristic to, detection of an abnormal operational state, determination of an abnormal operational state type, and/or the like. The signal characteristic instructions may further provide instructions regarding when to cause a rescue signal to be provided and/or which computing entity to provide the rescue signal to.

In some embodiments, safety maneuver instructions 1454 may be configured to provide instructions regarding the determination of a safety maneuver for the AV 105. For example, the safety maneuver instructions 1454 may provide instructions regarding determination of a time window and safety location for which to perform a safety maneuver.

### Example operational subsystem 1500

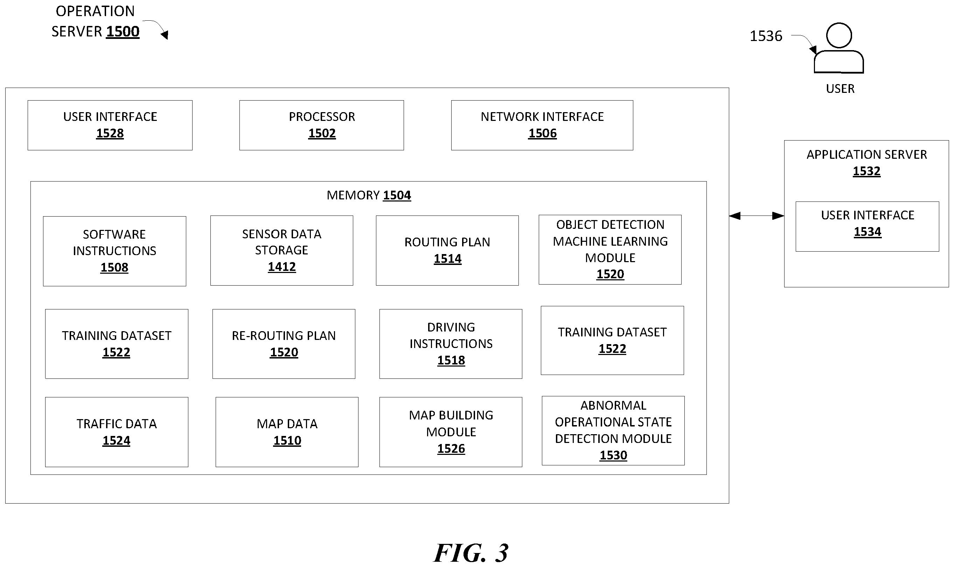

FIG. 3 shows an embodiment of the operational subsystem 1500. The operational subsystem 1500 includes at least one processor 1502, at least one memory 1504, and at least one network interface 1506. The operational subsystem 1500 may be configured as shown or in any other suitable configuration. In some embodiments, the operational subsystem may be associated with a rescue center 120 and/or a mobile rescue center 110.

The processor 1502 comprises one or more processors operably coupled to the memory 1504. The processor 1502 is any electronic circuitry including, but not limited to, state machines, one or more central processing unit (CPU) chips, logic units, cores (e.g. a multi-core processor), field-programmable gate array (FPGAs), application specific integrated circuits (ASICs), or digital signal processors (DSPs). The processor 1502 may be a programmable logic device, a microcontroller, a microprocessor, or any suitable combination of the preceding. The processor 1502 is communicatively coupled to and in signal communication with the memory 1504, the network interface 1506, and user interface 1528. The one or more processors are configured to process data and may be implemented in hardware or software. For example, the processor 1502 may be 8-bit, 16-bit, 32-bit, 64-bit or of any other suitable architecture. The processor 1502 may include an arithmetic logic unit (ALU) for performing arithmetic and logic operations, processor registers that supply operands to the ALU and store the results of ALU operations, and a control unit that fetches instructions from memory and executes them by directing the coordinated operations of the ALU, registers and other components. The one or more processors are configured to implement various instructions. For example, the one or more processors are configured to execute instructions to implement the function disclosed herein, such as some or all of those described with respect to FIGS. 1-8. In some embodiments, the function described herein is implemented using logic units, FPGAs, ASICs, DSPs, or any other suitable hardware or electronic circuitry.

The memory 1504 is operable to store any of the information described below along with any other data, instructions, logic, rules, or code operable to implement the function(s) described herein when executed by processor 1502. For example, the memory 1504 may store software instructions 1508, map data 1510, re-routing plans 1520, routing plan 1514, training dataset 1522, driving instructions 1518, sensor data 1412 received from the AVs 105, traffic data 1524, map building module 1526, and/or any other data/instructions. The memory 1504 comprises one or more disks, tape drives, or solid-state drives, and may be used as an over-flow data storage device, to store programs when such programs are selected for execution, and to store instructions and data that are read during program execution. The memory 1504 may be volatile or non-volatile and may comprise read-only memory (ROM), random-access memory (RAM), ternary content-addressable memory (TCAM), dynamic random-access memory (DRAM), and static random-access memory (SRAM).

The network interface 1506 is configured to enable wired and/or wireless communications. The network interface 1506 is configured to communicate data between the control subsystem 1400 and other network devices, systems, or domain(s). For example, the network interface 1506 may comprise a WIFI interface, a local area network (LAN) interface, a wide area network (WAN) interface, a modem, a switch, or a router. The processor 1502 is configured to send and receive data using the network interface 1506. The network interface 1506 may be configured to use any suitable type of communication protocol.

In one embodiment, the operational subsystem 1500 may be implemented by a cluster of computing devices that may serve to oversee the operations of the AV 105. For example, the operational subsystem 1500 may be implemented by a plurality of computing devices using distributed computing and/or cloud computing systems. In another example, the operational subsystem 1500 may be implemented by a plurality of computing devices in one or more data centers. In another example, at least a portion of the operational subsystem 1500 may be implemented by a plurality of computing devices in one or more rescue centers 120. In yet another example, at least a portion of the operational subsystem 1500 may be implemented by a plurality of computing devices in one or more mobile rescue centers 110. The operational subsystem 1500 is in signal communication with the AV 105 and its components (e.g., the in-vehicle control computer 1650). In one embodiment, the operational subsystem 1500 is configured to determine a particular routing plan 1514 for each AV 105. For example, the operational subsystem 1500 may determine a particular routing plan 1514 for an AV 105 that leads to reduced driving time and a safer driving experience for reaching the destination of that AV 105. In one embodiment, the operational subsystem 1500 may capture and record the navigation plans set by the user 1536 in each situation and use it in similar situations.

In one embodiment, the operational subsystem 1500 may send the sensor data 1412 to an application server 1532 to be reviewed by users 1536. The application server 1532 is generally any computing device configured to communicate with other devices, such as other servers (e.g., operational subsystem 1500), AV 105, databases, etc., via a network interface. The application server 1532 is configured to perform specific functions described herein and interact with users 1536, e.g., via its user interfaces 1534. Examples of the application server 1532 include but are not limited to desktop computers, laptop computers, servers, etc. In one example, the application server 1532 may act as a presentation layer where users 1536 access to review the sensor data 1412. As such, the operational subsystem 1500 may send the sensor data 1412 to an application server 1532. The user 1536 may review the sensor data 1412 from the user interface 1534 and confirm, modify, and/or override navigating solutions for the AVs 105 determined by the control subsystem 1400 and/or the operational subsystem 1500, such as described above.

Map data 1510 may include a virtual map of a city which includes a route. In some examples, the map data 1510 may include one or more map databases. The map data 1510 may include drivable areas, such as roads, paths, highways, and undrivable areas, such as terrain. The map data 1510 may specify location coordinates of road signs, lanes, lane markings, lane boundaries, road boundaries, traffic lights, etc.

The map data 1510 may also specify connections between lanes (e.g., which lanes can feed into other adjacent lanes). The map data 1510 may specify information indicating types of lanes of a road (e.g., traffic lane, passing lane, emergency lane, turning lane, bus lane, etc.), types of lane boundaries (e.g., white lines, yellow lines, other road surface markings and/or mechanical markings, etc.), types of road boundaries (e.g., regular curbs, red curbs, sidewalks, guard rails, other barriers, etc.) road intersections, one or more obstacles ahead of the autonomous vehicle, and other information about the road or areas adjacent to the road. The map data 1510 may also specify elevations of roads, such as curves, hills, valleys; road hazards, such as speed bumps, potholes; road sections, such as road school zones, railroad crossings, etc.

Map building module 1526 may be implemented by the processor 1502 executing software instructions 1508, is configured to build the map data 1510. In one embodiment, the map building module 1526 may build the map data 1510 from sensor data received from one or more mapping vehicles. In one example, a mapping vehicle may be an AV 105. In another example, a mapping vehicle may be an AV 105 or un-autonomous vehicle connected or integrated with sensors 1646 operated by a driver.

The map building module 1526 is configured to use the sensor data to determine which portion of the map data 1510 they are associated with. The map building module 1526 may dynamically build each section of the map data 1510 by merging different sensor data associated with each section of the map data 1510. The map building module 1526 also uses the sensor data to discover overlapping portions of the map data 1510 (e.g., by matching corresponding images, videos, LiDAR data, radar data, etc. observing the same portion of the map data 1510). The map building module 1526 then connects portions of the map data 1510 with their corresponding adjacent portions. In other words, the map building module 1526 discovers adjacent portions of the map data 1510, stitches them together, and builds the map data 1510. The map building module 1526 is also configured to update a portion of the map data 1510 that based at least in part on the received sensor data needs to be updated.

For example, in the case of an unknown object in a roadway, when the operational subsystem 1500 receives the sensor data from the AV 105, once it is confirmed that there is indeed an unknown object at particular location coordinates, the map building module 1526 updates a portion of the map data 1510, reflecting the presence of the unknown object. Similarly, the map building module 1526 updates different portions of the map data 1510 based at least in part on sensor data related to different cases of encountering unexpected situations.

The map building module 1526 is also configured to facilitate shadow testing of routing plans 1514 using the new layout of one or more roads in the updated map data 1510. For example, when the map data 1510 is updated, the map building module 1526 may run one or more simulations of autonomous driving through the updates map data 1510 for the AV 105. For example, the one or more simulations of autonomous driving may be related to the AV 105 navigating around an object, changing lanes, pulling over, re-routing, etc.

The map building module 1526 selects a particular of course of autonomous driving from the one or more simulations of autonomous driving that leads to a more efficient, safe, and reliable navigating solution for each AV 105 compared to other simulations.

Routing plan 1514 is a plan for traveling from a start location (e.g., a first AV launch pad/landing pad) to a destination (e.g., a second AV launchpad/landing pad). For example, the routing plan 1514 of the AV 105 may specify a combination of one or more streets/roads/highways in a specific order from the start location to the destination. The routing plan 1514 of the AV 105 may specify stages including the first stage (e.g., moving out from the start location), a plurality of intermediate stages (e.g., traveling along particular lanes of one or more particular street/road/highway), and the last stage (e.g., entering the destination. The routing plan 1514 may include other information about the route from the start position to the destination, such as road/traffic signs in that routing plan 1514, etc.

The driving instructions 1518 may include instructions and rules to adapt the autonomous driving of the AV 105 according to the driving rules of each stage of the routing plan 1514. For example, the driving instructions 1518 may include instructions to stay within the speed range of a road traveled by the AV 105, adapt the speed of the AV 105 with respect to observed changes by the sensors 1646, such as speeds of surrounding vehicles, objects within the detection zones of the sensors, etc.

Object detection machine learning modules 1520 may be implemented by the processor 1502 executing software instructions 1508 and is generally configured to detect objects from the sensor data 1412. The object detection machine learning modules 1520 may be implemented using neural networks and/or machine learning algorithms for detecting objects from any data type, such as images, videos, infrared images, point clouds, radar data, etc.

In one embodiment, the object detection machine learning modules 1520 may be implemented using machine learning algorithms, such as Support Vector Machine (SVM), Naive Bayes, Logistic Regression, k-Nearest Neighbors, Decision trees, or the like. In one embodiment, the object detection machine learning modules 1520 may utilize a plurality of neural network layers, convolutional neural network layers, and/or the like, in which weights and biases of perceptrons of these layers are optimized in the training process of the object detection machine learning modules 1520. The object detection machine learning modules 1520 may be trained by the training dataset 1522 which includes samples of data types labeled with one or more objects in each sample. For example, the training dataset 1522 may include sample images of objects (e.g., vehicles, lane markings, pedestrian, road signs, etc.) labeled with object(s) in each sample image. Similarly, the training dataset 1522 may include samples of other data types, such as videos, infrared images, point clouds, radar data, etc. labeled with object(s) in each sample data. The object detection machine learning modules 1520 may be trained, tested, and refined by the training dataset 1522 and the sensor data 1412. The object detection machine learning modules 1520 uses the sensor data 1412 (which are not labeled with objects) to increase their accuracy of predictions in detecting objects. For example, supervised and/or unsupervised machine learning algorithms may be used to validate the predictions of the object detection machine learning modules 1520 in detecting objects in the sensor data 1412.

Traffic data 1524 may include traffic data 1524 of roads/streets/highways in the map data 1510. The operational subsystem 1500 may use traffic data 1524 gathered by one or more mapping vehicles. The operational subsystem 1500 may use traffic data 1524 that is captured from any source, such as crowd-sourced traffic data 1524 captured from external sources, e.g., mapping software, live traffic reporting, etc.

Abnormal operational state detection modules 1530 may be implemented by the processor 1502 executing software instructions 1508 and is generally configured to detect abnormal operational states of an AV 105 based at least in part on received sensor data 1412. For example, the abnormal operational state detection modules 1530 may include instructions to evaluate the signal characteristics of the received signals from the AV 105 and compare the signal characteristics to one or more threshold signal characteristics corresponding to a sensor type used to capture the signal. The abnormal operational state detection modules 1530 may further be configured to detect an abnormal operational state and/or determine an abnormal operational state type. In some embodiments, abnormal operational state detection modules 1530 may be configured to determine a time window and/or a safety location for the AV 105 to perform a safety maneuver.

### Example AV 105 and its operation

FIG. 4 shows a block diagram of an example vehicle ecosystem 1600 in which autonomous driving operations can be determined. As shown in FIG. 16, the AV 105 may be a semi-trailer truck. The vehicle ecosystem 1600 includes several systems and components that can generate and/or deliver one or more sources of information/data and related services to the in-vehicle control computer 1650 that may be located in an AV 105. The in-vehicle control computer 1650 can be in data communication with a plurality of vehicle subsystems 1640, all of which can be resident in the AV 105. A vehicle subsystem interface 1660 is provided to facilitate data communication between the in-vehicle control computer 1650 and the plurality of vehicle subsystems 1640. In some embodiments, the vehicle subsystem interface 1660 can include a controller area network (CAN) controller to communicate with devices in the vehicle subsystems 1640.

The AV 105 may include various vehicle subsystems that support of the operation of AV 105. The vehicle subsystems may include the control subsystem 1400, a vehicle drive subsystem 1642, a vehicle sensor subsystem 1644, and/or a vehicle control subsystem 1648. The components or devices of the vehicle drive subsystem 1642, the vehicle sensor subsystem 1644, and the vehicle control subsystem 1648 shown in FIG. 4 are examples. The vehicle drive subsystem 1642 may include components operable to provide powered motion for the AV 105. In an example embodiment, the vehicle drive subsystem 1642 may include an engine/motor 1642a, wheels/tires 1642b, a transmission 1642c, an electrical subsystem 1642d, and a power source 1642e.

The vehicle sensor subsystem 1644 may include a number of sensors 1646 configured to sense information about an environment or condition of the AV 105. The vehicle sensor subsystem 1644 may include one or more cameras 1646a, which may be equipped with microphones, or image capture devices, a radar unit 1646b, one or more temperature sensors 1646c, a wireless communication unit 1646d (e.g., a cellular communication transceiver), an inertial measurement unit (IMU) 1646e, a laser range finder/LiDAR unit 1646f, a Global Positioning System (GPS) transceiver 1646g, a wiper control system 1646h, microphones 1646i, and/or tire pressure sensor(s) 1646j. The vehicle sensor subsystem 1644 may also include sensors configured to monitor internal systems of the AV 105 (e.g., an O2 monitor, a fuel gauge, an engine oil temperature, etc.).

The IMU 1646e may include any combination of sensors (e.g., accelerometers and gyroscopes) configured to sense position and orientation changes of the AV 105 based at least in part on inertial acceleration. The GPS transceiver 1646g may be any sensor configured to estimate a geographic location of the AV 105. For this purpose, the GPS transceiver 1646g may include a receiver/transmitter operable to provide information regarding the position of the AV 105 with respect to the Earth. The radar unit 1646b may represent a system that utilizes radio signals to sense objects within the local environment of the AV 105. In some embodiments, in addition to sensing the objects, the radar unit 1646b may additionally be configured to sense the speed and the heading of the objects proximate to the AV 105. The laser range finder or LiDAR unit 1646f may be any sensor configured to sense objects in the environment in which the AV 105 is located using lasers. The cameras 1646a may include one or more devices configured to capture a plurality of images of the environment of the AV 105. The cameras 1646a may be still image cameras or motion video cameras. In some embodiments, the cameras 1646a may be configured with one or more microphones to capture audio data. Additionally or alternatively, one or more microphones 1646i may be configured to capture audio data of the environment of the AV 105 and/or pertaining to the AV 105.

The vehicle control subsystem 1648 may be configured to control the operation of the AV 105 and its components. Accordingly, the vehicle control subsystem 1648 may include various elements such as a throttle and gear 1648a, a brake unit 1648b, a navigation unit 1648c, a steering system 1648d, and/or an autonomous control unit 1648e. The throttle 1648a may be configured to control, for instance, the operating speed of the engine and, in turn, control the speed of the AV 105. The gear 1648a may be configured to control the gear selection of the transmission. The brake unit 1648b can include any combination of mechanisms configured to decelerate the AV 105. The brake unit 1648b can use friction to slow the wheels in a standard manner. The brake unit 1648b may include an Anti-lock brake system (ABS) that can prevent the brakes from locking up when the brakes are applied. The navigation unit 1648c may be any system configured to determine a driving path or route for the AV 105. The navigation 1648c unit may additionally be configured to update the driving path dynamically while the AV 105 is in operation. In some embodiments, the navigation unit 1648c may be configured to incorporate data from the GPS transceiver 1646g and one or more predetermined maps so as to determine the driving path for the AV 105. The steering system 1648d may represent any combination of mechanisms that may be operable to adjust the heading of AV 105 in an autonomous mode or in a driver-controlled mode.

The autonomous control unit 1648e may represent a control system configured to identify, evaluate, and avoid or otherwise negotiate potential obstacles or obstructions in the environment of the AV 105. In general, the autonomous control unit 1648e may be configured to control the AV 105 for operation without a driver or to provide driver assistance in controlling the AV 105. In some embodiments, the autonomous control unit 1648e may be configured to incorporate data from the GPS transceiver 1646g, the radar 1646b, the LiDAR unit 1646f, the cameras 1646a, and/or other vehicle subsystems to determine the driving path or trajectory for the AV 105.

Many or all of the functions of the AV 105 can be controlled by the in-vehicle control computer 1650. The in-vehicle control computer 1650 may include at least one data processor 1670 (which can include at least one microprocessor) that executes processing instructions 1680 stored in a non-transitory computer readable medium, such as the data storage device 1690 or memory. The in-vehicle control computer 1650 may also represent a plurality of computing devices that may serve to control individual components or subsystems of the AV 105 in a distributed fashion. In some embodiments, the data storage device 1690 may contain processing instructions 1680 (e.g., program logic) executable by the data processor 1670 to perform various methods and/or functions of the AV 105.

The data storage device 1690 may contain additional instructions as well, including instructions to transmit data to, receive data from, interact with, or control one or more of the vehicle drive subsystem 1642, the vehicle sensor subsystem 1644, and the vehicle control subsystem 1648. The in-vehicle control computer 1650 can be configured to include a data processor 1670 and a data storage device 1090. The in-vehicle control computer 1650 may control the function of the AV 105 based at least in part on inputs received from various vehicle subsystems (e.g., the vehicle drive subsystem 1642, the vehicle sensor subsystem 1644, and the vehicle control subsystem 1648).

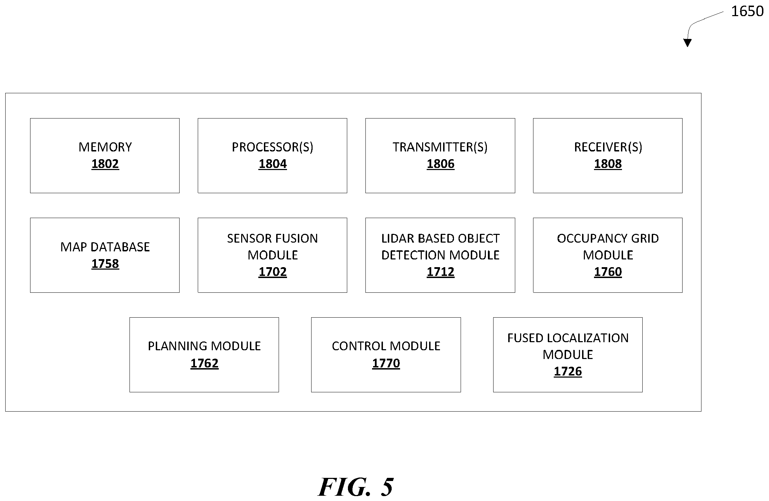

FIG. 5 shows an exemplary block diagram of an in-vehicle control computer 1650 included in an AV 105. The in-vehicle control computer 1650 includes at least one processor 1804 and a memory 1802 having instructions stored thereupon (e.g., software instructions 1408, 1508, and processing instructions 1680 in FIGS. 2, 3, and 4, respectively). The instructions upon execution by the processor 1804 configure the in-vehicle control computer 1650 and/or the various modules of the in-vehicle control computer 1650 to perform the operations described in FIGS. 2-4. The transmitter 1806 transmits or sends information or data to one or more devices in the autonomous vehicle. For example, a transmitter 1806 can send an instruction to one or more motors of the steering wheel to steer the autonomous vehicle. The receiver 1808 receives information or data transmitted or sent by one or more devices. For example, the receiver 1808 receives a status of the current speed from the odometer sensor or the current transmission gear from the transmission. The transmitter 1806 and receiver 1808 are also configured to communicate with the control subsystem 1400.

The in-vehicle control computer 1650 may include a sensor fusion module 1702, which may perform image or signal processing operations. The sensor fusion module 1702 can obtain images from cameras located on an autonomous vehicle to perform image segmentation to detect the presence of moving objects (e.g., other vehicles, pedestrians, etc.,) and/or static obstacles (e.g., stop sign, speed bump, terrain, etc.,) located around the autonomous vehicle. The sensor fusion module 1702 can obtain LiDAR point cloud data item from LiDAR sensors located on the autonomous vehicle to perform LiDAR segmentation to detect the presence of objects and/or obstacles located around the autonomous vehicle.

The sensor fusion module 1702 can perform instance segmentation on image and/or point cloud data item to identify an outline (e.g., boxes) around the objects and/or obstacles located around the autonomous vehicle. The sensor fusion module 1702 can perform temporal fusion where objects and/or obstacles from one image and/or one frame of point cloud data item are correlated with or associated with objects and/or obstacles from one or more images or frames subsequently received in time.

The sensor fusion module 1702 can fuse the objects and/or obstacles from the images obtained from the camera and/or point cloud data item obtained from the LiDAR sensors. For example, the sensor fusion module 1702 may determine based at least in part on a location of two cameras that an image from one of the cameras comprising one half of a vehicle located in front of the autonomous vehicle is the same as the vehicle located captured by another camera. The sensor fusion module 1702 sends the fused object information to the interference module 1746 and the fused obstacle information to the occupancy grid module 1760. The in-vehicle control computer includes the occupancy grid module 1760 can retrieve landmarks from a map database 1758 stored in the in-vehicle control computer. The occupancy grid module 1760 can determine drivable areas and/or obstacles from the fused obstacles obtained from the sensor fusion module 1702 and the landmarks stored in the map database 1758. For example, the occupancy grid module 1760 can determine that a drivable area may include a speed bump obstacle.

The in-vehicle control computer 1650 may also include a LiDAR based object detection module 1712 that can perform object detection 1716 based at least in part on point cloud data item obtained from the LiDAR sensors located on the AV 105. The object detection technique can provide a location (e.g., in 3D world coordinates) of objects from the point cloud data item. Below the LiDAR based object detection module 1712, the in-vehicle control computer may include an image based object detection module that can perform object detection based at least in part on images obtained from cameras located on the autonomous vehicle. The object detection technique can employ a deep machine learning technique to provide a location (e.g., in 3D world coordinates) of objects from the image provided by the camera.

The radar on the autonomous vehicle can scan an area in front of the autonomous vehicle or an area towards which the autonomous vehicle is driven. The radar data is sent to the sensor fusion module 1702 that can use the radar data to correlate the objects and/or obstacles detected by the radar with the objects and/or obstacles detected from both the LiDAR point cloud data item and the camera image.

The planning module 1762 can perform navigation planning 1764 to determine a set of trajectories on which the AV 105 can be driven. The set of trajectories can be determined based at least in part on the drivable area information, location of the obstacles, and the drivable area information. In some embodiments, the navigation planning may include determining an area next to the road where the autonomous vehicle can be safely parked in case of emergencies. The planning module 1762 may include behavioral decision making to determine driving actions (e.g., steering, braking, throttle) in response to determining changing conditions on the road (e.g., traffic light turned yellow, or the autonomous vehicle is in an unsafe driving condition because another vehicle drove in front of the autonomous vehicle and in a region within a pre-determined safe distance of the location of the autonomous vehicle). The planning module 1762 performs trajectory generation and selects a trajectory from the set of trajectories determined by the navigation planning operation. The selected trajectory information is sent by the planning module 1762 to the control module 1770.

The in-vehicle control computer includes a control module 1770 that receives the proposed trajectory from the planning module 1762 and the autonomous vehicle location and pose from the fused localization module 1726. The control module 1770 includes a system identifier. The control module 1770 can perform a model based trajectory refinement to refine the proposed trajectory. For example, the control module 1770 can applying a filtering (e.g., Kalman filter) to make the proposed trajectory data smooth and/or to minimize noise. The control module 1770 may perform the robust control by determining, based at least in part on the refined proposed trajectory information and current location and/or pose of the autonomous vehicle, an amount of brake pressure to apply, a steering angle, a throttle amount to control the speed of the vehicle, and/or a transmission gear. The control module 1770 can send the determined brake pressure, steering angle, throttle amount, and/or transmission gear to one or more devices in the autonomous vehicle to control and facilitate precise driving operations of the autonomous vehicle.

### Example Abnormal Operational State Detection

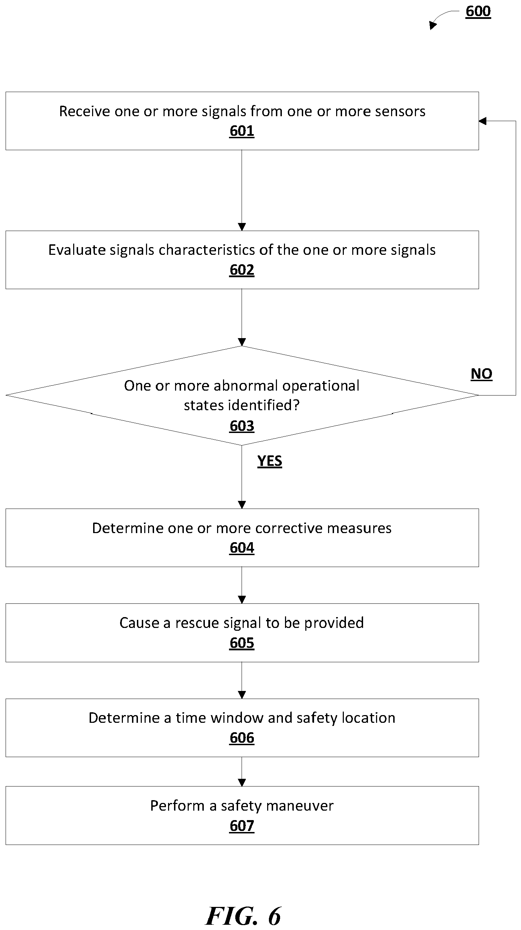

FIG. 6 illustrates a flow chart of an example method 600 for identifying one or more abnormal operational states and performing a safety maneuver. The one or more of steps/operations depicted in FIG. 6 may be implemented, at least in part, in the form of software instructions 1408, 1508, and 1680 stored on non-transitory, tangible, machine-readable media (e.g., memories 1404, 1504, 1690, and 1802) that when run by one or more processors (e.g., processors 1402, 1502, 1670, and 1804) may cause the one or more processors to perform steps 601-607. In some embodiments, method 600 may be performed by control subsystem 1400, operational subsystem 1500, and in-vehicle control computer 1650, respectively from FIGS. 2-5.

As shown in step/operation 601, an apparatus, such as control subsystem 1400, may include means such as processor 1402, memory 1404, network interface 1406, and/or the like for receiving one or more signals from one or more sensors. The one or more sensors may be any of the sensors of the vehicle sensor subsystem 1644 as described above in FIG. 4. The one or more sensors may be carried by the AV 105. In some embodiments, the one or more signals may include audio signals, image data signals, one or more measurement signals (e.g., environmental temperature, AV temperature, oil pressure, fuel availability, tire pressure, etc.), and/or the like. The type of signal may depend on the sensor configured to capture the signal. For example, a camera 1646 may be configured to capture image data. As another example, tire pressure sensor 1646j may be configured to capture one or more measurement signals indicative of the pressure in one or more of the tires of AV 105.

In some embodiments, the one or more signals may be associated with a frequency and/or amplitude captured by the corresponding sensor. In some embodiments, the one or more signals may be associated with a numeric value. In some embodiments, the one or more signals may be associated with image data. The one or more signals provided by the one or more sensors may also include or be associated with information identifying the respective sensor that captured the respective signal and/or the time at which the respective signal was captured.

As shown in step/operation 602, an apparatus, such as control subsystem 1400, may include means such as processor 1402, memory 1404, and/or the like for evaluating signal characteristics of the one or more signals. The processor may be configured to evaluate a variety of different signal characteristics in any number of different manners in order to identify one or more signals indicative of an abnormal operational state. Furthermore, the processor 1402 may be configured to evaluate signals from a variety of sensors in one or more particular manners. For example, signals corresponding to audio data may be evaluated in a manner different from visual data, which may further be evaluated in a manner different from measurement data. The manner in which each signal is processed may further depend on the type of sensor which the signal was received from. For example, signals received from tire pressure sensor 1646j may be evaluated differently from signals received from temperature sensor 1646c.

In general, each received signal may evaluated for signal characteristics and those signal characteristics may be compared to one or more threshold signal characteristics associated with the type of sensor used to capture the signal. In the event a signal characteristic is evaluated and does not satisfy the one or more threshold signal characteristics, the control subsystem may identify that the signal has characteristics indicative of an abnormal operational state. By way of continuing example, a signal received from tire pressure sensor 1646j may be evaluated and the signal characteristic may be determined to correspond to a tire pressure of 90 pound-force per square inch (psi). The one or more threshold signal characteristic values for tire pressure may correspond to 100 psi and 140 psi such that tire pressures below 100 psi or above 140 psi are determined to be indicative of an abnormal operational state. As such, the evaluated signal from the tire pressure sensor 1646j may be determined to be indicative of an abnormal operational state (i.e., the evaluated signal characteristic indicates a tire pressure below acceptable limits).

In some embodiments, the control subsystem 1400 may be configured to evaluate signal characteristics indicative of a hardware malfunction. For example, if a signal received from inertial measurement unit (IMU) 1646e indicates a value of 'NULL' or 0, the control subsystem 1400 may be configured to determine the signal characteristic is indicative of an abnormal state and further, likely indicative of a malfunction of the IMU 1646e. In some embodiments, the control subsystem 1400 may be configured to expect signals from one or more sensors periodically or semi-periodically. In the event that the control subsystem 1400 does not receive an expected signal from a sensor, the control subsystem 1400 may be configured to identify the lack of expected signal as indicative of an abnormal operational state.

In some embodiments, the control subsystem 1400 is configured to filter the one or more signals based upon one or more of the frequency, amplitude, and/or change of frequency or amplitude of the signals in order to discriminate between signals having signal characteristics indicative of an abnormal operational state. For example, the control subsystem 1400 may evaluate audio signals captured using microphone sensors 1646i to identify frequency ranges which may correspond to a blown tire, an air leak, a crash event, and/or the like. In some embodiments, the control subsystem is configured to filter the signals to identify signal characteristics indicative of frequencies and/or amplitude of the signals and compare the signals to one or more threshold signal characteristics. For example, an audio signal may be filtered to determine audio signals corresponding to amplitudes above 100 decibels (dB) and a frequency range between 2000 to 3000 hertz (Hz). In the event a signal is determined to have signal characteristics which describe an amplitude above 100 dB and in a frequency range between 2000 to 3000 Hz, the control subsystem 1400 may determine an abnormal event (e.g., due to inference of a blown tire event). As another example, an audio signal may be filtered to determine audio signals which increase in amplitude or frequency by over 100 percent. In the event a signal is determined to have signal characteristics which describe an increase in audio amplitude above 100%, an abnormal event may be determined.

Although various techniques have been described above for identifying signals having signal characteristics indicative of an abnormal event, including various rule-based techniques, the control subsystem 20, such as the processing circuitry 22, may be configured to identify signals indicative of an abnormal event in a variety of other manners. For example, the control subsystem, such as the processing circuitry, of another example embodiment may include an artificial intelligence and/or machine learning engines that have been trained to identify signals indicative of an abnormal event.

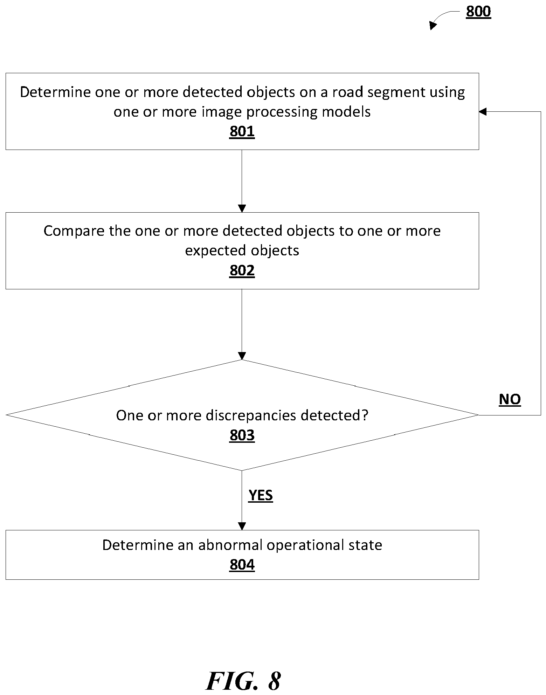

In some embodiments, step/operation 602 may be performed in accordance with the process that is depicted in FIG. 8, which is an example process for detecting one or more discrepancies using one or more image processing models. The one or more of steps/operations depicted in FIG. 8 may be implemented, at least in part, in the form of software instructions 1408, 1508, and 1680 stored on non-transitory, tangible, machine-readable media (e.g., memories 1404, 1504, 1690, and 1802) that when run by one or more processors (e.g., processors 1402, 1502, 1670, and 1804) may cause the one or more processors to perform steps 601-607. In some embodiments, method 600 may be performed by control subsystem 1400, operational subsystem 1500, and in-vehicle control computer 1650, respectively from FIGS. 2-5. Furthermore, although FIG. 8 is described below with respect to the control subsystem 1400, the step/operations performed in FIG. 8 may additionally or alternatively be performed by operational subsystem 1500.

As shown in step/operation 801, an apparatus, such as control subsystem 1400, may include means such as processor 1402, memory 1402 and/or the like for determining one or more detected objects on a road segment. The control subsystem 1400 may determine the one or more detected objects on a road segment using one or more image processing models. In some embodiments, the one or more image processing models may the object detection machine learning modules 1520 as stored in memory 1402.

In one embodiment, the object detection machine learning modules 1520 may be implemented using machine learning algorithms, such as Support Vector Machine (SVM), Naive Bayes, Logistic Regression, k-Nearest Neighbors, Decision trees, or the like. In one embodiment, the object detection machine learning modules 1520 may utilize a plurality of neural network layers, convolutional neural network layers, and/or the like, in which weights and biases of perceptrons of these layers are optimized in the training process of the object detection machine learning modules 1520. The object detection machine learning modules 1520 may be trained by the training dataset 1522 which includes samples of data types labeled with one or more objects in each sample. The object detection machine learning modules 1520 may evaluate one or more signals, such as image signals received from the one or more cameras 1646a to identify one or more detected objects on a road segment. For example, the one or more objects may include other vehicles, road signs, pedestrians, and/or other objects on and/or nearby the road segment.

As shown in step/operation 802, an apparatus, such as control subsystem 1400, may include means such as processor 1402, memory 1404, and/or the like for comparing one or more detected objects to one or more expected objects. The one or more expected objects may be queried from map data 1510. The map database 1510 may define expected objects and their respective locations on a road segment. For example, the ODD may describe a location of particular road signs, road segment lanes, exit ramps, on-ramps, and/or the like.

As shown in step/operation 803, an apparatus, such as control subsystem 1400, may include means such as processor 1402, and/or the like for determining whether one or more discrepancies are detected. In some embodiments, a discrepancy may be detected in the instance an expected object is not detected. For example, if the map database 1510 indicates that a road segment should have 3 lanes at a particular location but the image data from the one or more signals depicts the road segment as only have 2 lanes, a discrepancy may be detected. In some embodiments, a discrepancy may be detected in the instance a detected object does not correspond to an expected object as defined in the map database 1510. For example, if the image data from the one or more signals depicts a foreign object in a lane of the roadway and the map database 1510 does not indicate such an object should be at the location, a discrepancy may be detected.

However, not every discrepancy between detected objects and expected objects should result in an abnormal operational state. For example, in the event a mile marker road sign is expected at a particular location, but the image data indicates the road sign is missing, this may not necessitate detection of an abnormal operational state. A stored operational defined domain (ODD) may describe acceptable operating conditions for the AV 105. For example, the ODD may describe roadway types, speed ranges, environmental conditions, etc. which define conditions for which the AV 105 is allowed to operate within. In some embodiments, the ODD may also define which discrepancies necessitate an abnormal operational state detection. For example, foreign objects in the road, discrepancies between an expected number of lanes and a detected number of lanes, unexpected lane closures, and/or the like may be defined in by the ODD as discrepancies which warrant detection of an abnormal operational state.

In an instance no discrepancies are detected, the control subsystem 1400 may return to step/operation 801. As described above, if discrepancies between expected objects and detected objects are determined but not defined in the ODD as a condition which requires detection of an abnormal operational state, the control subsystem 1400 may also return to step/operation 801. As such, the control subsystem 801 may continue to monitor image data from the one or more signals and dynamically assess whether one or more discrepancies are detected and whether such discrepancies require an abnormal state to be detected as defined by the ODD.

In an instance one or more discrepancies are detected, the control subsystem 1400 may proceed to step/operation 804. As described above, if discrepancies between expected objects and detected objects are determined and are defined in the ODD as a condition which requires detection of an abnormal operational state, the control subsystem 1400 may proceed to step/operation 804. As shown in step/operation 804, an apparatus, such as control subsystem 1400, may include means such as processor 1402, and/or the like for determining that an abnormal state is detected. In some embodiments, the abnormal state may indicate what type of discrepancy was detected. For example, an abnormal state may indicate an unexpected object was detected. As another example, an abnormal state may indicate that an expected object was not detected.

Returning now to FIG. 6, as shown in step/operation 603, an apparatus, such as control subsystem 1400, may include means such as processor 1402, and/or the like for determining whether one or more abnormal operational states have been identified. As described above, an abnormal state may be detected in any variety of ways. Furthermore, the control subsystem 1400 may also detect a type of abnormal operational state which was detected. In some embodiments, the type of abnormal operational states may include a maintenance abnormal operational state or a precautionary abnormal operational state. In some embodiments, the type of abnormal operational state may be determined based at least in part on the sensor associated with the signal which was evaluated and identified as having characteristics indicative of an abnormal operational state and/or the sensor characteristic. For example, in the signals (e.g., image data) from a camera 1646a are found to have signal characteristics indicative of a discrepancy which results in an abnormal operational state, such as a foreign object on the road segment, the type of abnormal operational state may be determined as an safety operational state type. As the abnormal operational state was detected due to processing of the image data rather than an issue with the sensor, the control subsystem 1400 may determine the type of abnormal operational state as a safety abnormal operational state type. As another example, if a signal is expected from camera 1646a every 10 milliseconds but the control subsystem 1400 fails to receive the signal within the expected time frame, the control subsystem may determine an abnormal operational state and further, may determine a maintenance abnormal operational state type.

In the event no abnormal operational states are identified, the control subsystem 1400 may proceed to step/operation 601, where the control subsystem 1400 may continue to monitor and/or receive signals from the one or more sensors. As such, the control subsystem 1400 may dynamically monitor for abnormal operational states.

In the event one or more abnormal operational states are identified, the control subsystem 1400 may proceed to step/operation 604. At step/operation 604, an apparatus, such as control subsystem 1400, may include means such as processor 1402, and/or the like for determining one or more corrective measures. The one or more corrective measures may be determined based at least in part on a type of abnormal operational state identified. For example, if the abnormal operational state is determined to be a maintenance abnormal operational state type, the one or more corrective measures may be indicative of hardware associated with the AV 105 in need of replacement. By way of continuing example, in the event the control subsystem 1400 fails to receive a signal from a camera 1646a within the expected time frame and thus determines a maintenance abnormal operational state type, the one or more corrective measures may indicate a camera is in need of replacement. As another example, if the abnormal operational state is determined to be a safety abnormal operational state type, then the one or more corrective measures may be indicative that a driver is needed. By way of continuing example, in the event the control subsystem 1400 determines the signals (e.g., image data) from a camera 1646a are found to have signal characteristics indicative of a discrepancy which results in an abnormal operational state, such as a foreign object on the road segment and thus, the control subsystem determines a safety abnormal operational state type, the one or more corrective measures may be indicative that a driver is needed to operate on the road segment portion associated with the foreign object.

As shown in step/operation 605, an apparatus, such as control subsystem 1400, may include means such as processor 1402, and/or the like for causing a rescue signal to be provided. In some embodiments, the control subsystem 1400 may provide the rescue signal to an operational subsystem 1500. The operational subsystem 1500 may be located within a mobile rescue center 110 and/or a rescue center 120. In some embodiments, the rescue signal may indicate the one or more corrective measures determined with respect to step/operation 604. For example, the rescue signal may indicate the type of abnormal operational state which was identified by the control subsystem 1400 (e.g., a maintenance abnormal operational state or a safety abnormal operational state) as well as the one or more corrective measures determined by the control subsystem 1400. For example, if the one or more corrective measures indicate a type of hardware in need of replacement, the rescue signal may include the indication of the type of hardware needed. As another example, if the one or more corrective measures indicate a driver is needed to operate the AV 105, the rescue signal may include an indication of a need for a driver.

As shown in step/operation 606, an apparatus, such as control subsystem 1400, may include means such as processor 1402, and/or the like for determining a time window and safety location for which to perform a safety maneuver. In some embodiments, the time window and/or safety location may be determined based at least in part on the ODD, which may define instructions for performing a safety measure. In some embodiments, the time window and safety location may be determined based at least in part on the type of abnormal operational state.

In some embodiments, the control subsystem 1400 may be configured to determine the time window and safety location. The control subsystem 1400 may determine the time window and safety location based at least in part on the type of abnormal operational state. The control subsystem 1400 may determine the time window and safety location based at least in part on the type of abnormal operational state. In some embodiments, the ODD may define one or more conditions, locations, and/or time frames for a safety measure to be performed. For example, if the abnormal operational state is determined to be a safety abnormal operational state type caused by a foreign object on the road segment, the ODD may define instructions for the AV 105 to pull off to the nearest road segment shoulder as soon as possible. In other words, when the abnormal operational state is determined to be a safety abnormal operational state, the time window may be such as to cause an immediate or as soon as possible performance of the safety maneuver. As another example, if the abnormal operational state condition is determined to be a maintenance abnormal operational state type caused by a malfunctioning camera but an additional camera of the AV 105 covers at least 80% of the field of view (FOV) of the camera with a malfunction, then the ODD may define instructions for the AV 105 to continue to the nearest rescue center 120. In other words, when the abnormal operational state is determined to be a maintenance abnormal operational state, the time window may be such that immediate performance of the safety maneuver is not required. As such, the time window for the maintenance abnormal state may be longer than the time window for the safety abnormal operational state. For example, in the maintenance abnormal operational state, the time window may require performance of the safety maneuver within a certain time frame from determination of the abnormal operational state, for example 10 minutes, 30 minutes or an hour. In another example, the time window may comprise a time frame having a duration dependent on the level of risk to operational safety associated with the determined abnormal operational state, with a higher risk requiring a shorter time frame. By varying the time window based on the determined abnormal operational state, more efficient and safe operation of the AV is provided as the AV's response time to abnormal operation is optimized based on the safety risk associated with the abnormal operation. The control subsystem 1400 may also query map data 1510 to determine safety locations for which to perform the safety maneuver in accordance with the ODD instructions. In some embodiments, the safety location is a designated emergency lane of a road segment. In some embodiments, the safety location is a designated rescue center.

Alternatively, the control subsystem 1400 may receive an instruction signal from an operational subsystem 1500. The instruction signal may be received in response to the rescue signal as provided to the operational subsystem 1500. The instruction signal may be indicative of the time window and/or safety location for which to perform a safety maneuver as determined by the control subsystem 1500.

As shown in step/operation 607, an apparatus, such as control subsystem 1400, may include means such as processor 1402, and/or the like for performing a safety maneuver. The safety maneuver may be performed within a time window with respect to a safety location. In some embodiments, the safety maneuver may include transitioning the AV 105 to a stop at the safety location. In some embodiments, once the AV 105 performs the safety maneuver, the AV 105 may cause a notification signal to be provided, such as to operational subsystem 1500. The notification signal may be indicative of whether the safety maneuver was successfully performed, the location of the AV 105, one or more status updates of the AV, and/or the like.

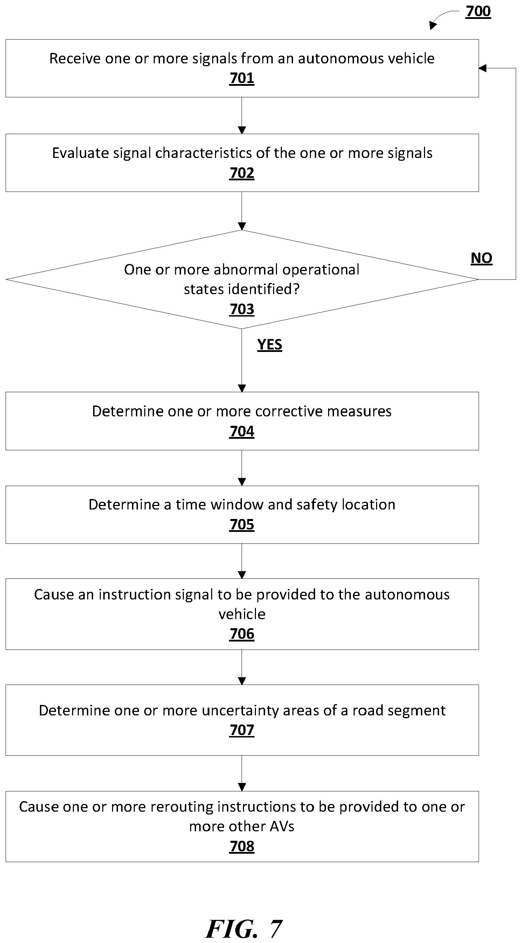

FIG. 7 illustrates a flow chart of an example method 700 for identifying one or more abnormal operational states and causing an instruction signal to be provided to the AV 105. The one or more of steps/operations depicted in FIG. 7 may be implemented, at least in part, in the form of software instructions 1408, 1508, and 1680 stored on non-transitory, tangible, machine-readable media (e.g., memories 1404, 1504, 1690, and 1802) that when run by one or more processors (e.g., processors 1402, 1502, 1670, and 1804) may cause the one or more processors to perform steps 701-708. In some embodiments, method 700 may be performed by control subsystem 1400, operational subsystem 1500, and in-vehicle control computer 1650, respectively from FIGS. 2-5.

As shown in step/operation 701, an apparatus, such as operational subsystem 1500, may include means such as processor 1502, memory 1504, network interface 1506, and/or the like for receiving one or more signals from an AV 105. In some embodiments, the one or more signals may include audio signals, image data signals, one or more measurement signals (e.g., environmental temperature, AV temperature, oil pressure, fuel availability, tire pressure, etc.), and/or the like as described above with respect to step/operation 601. Each of the one or more signals may also include or be associated with information identifying the respective sensor that captured the respective signal and/or the time at which the respective signal was captured.

As shown in step/operation 702, an apparatus, such as operational subsystem 1500, may include means such as processor 1502, memory 1504, and/or the like for evaluating signal characteristics of the one or more signals. The processor may be configured to evaluate a variety of different signal characteristics in any number of different manners in order to identify one or more signals indicative of an abnormal operational state. Furthermore, the processor 1402 may be configured to evaluate signals from a variety of sensors in one or more particular manners. The operational subsystem 1500 may be configured to evaluate the signal characteristics of the one or more signals in a similar manner as described above with respect to step/operation 602.

As shown in step/operation 703, an apparatus, such as operational subsystem 1500, may include means such as processor 1502, memory 1504, network interface 1506, and/or the like for determining whether one or more abnormal operational states are identified. The operational subsystem 1500 may be configured to determine whether one or more abnormal operational states are identified in a similar manner as described above with respect to step/operation 603 and the step/operations as described in FIG. 8. In some embodiments, the one or more abnormal operational states may be identified in response to receipt of a rescue signal from AV 105. In particular, the rescue signal may be indicative of one or more abnormal operational states as identified by AV 105, such as by the control subsystem 1400.

In the event no abnormal operational states are identified, the operational subsystem 1500 may proceed to step/operation 701, where the operational subsystem 1500 may continue to monitor and/or receive signals from the AV 105. As such, the operational subsystem 1500 may dynamically monitor for abnormal operational states from the AV 105.

In the event one or more abnormal operational states are identified, the operational subsystem 1500 may proceed to step/operation 704. At step/operation 704, an apparatus, such as operational subsystem 1500, may include means such as processor 1502, memory 1504, network interface 1506, and/or the like for determining one or more corrective measures. The one or more corrective measures may be determined based at least in part on a type of abnormal operational state identified. The one or more corrective measures may be indicative of hardware associated with the AV 105 in need of replacement. The operational subsystem 1500 may be configured to determine one or more corrective measures in a similar manner as described above with respect to step/operation 604.

In some embodiments the operational subsystem 1500 may determine whether the current resources associated with the operational subsystem are capable of performing the one or more corrective measures. For example, if the operational subsystem is implemented by mobile rescue center 110, the operational subsystem 1500 may evaluate the resources available within the mobile rescue center 110. The mobile rescue center 110 may be a vehicle that may be manually or semi-autonomously operated by one or more rescue center operators. In some embodiments, the mobile rescue center may be autonomously operated. The mobile rescue center may be equipped with diagnostic equipment, replacement hardware, and/or the like such that the mobile rescue center may diagnose and/or provide equipment to the AV 105. In some embodiments, the mobile rescue center may transport drivers to the AV 105 such that AV 105 may be operated manually and/or semi-autonomously. In the event the mobile rescue center is equipped with the resources (e.g., replacement hardware, drivers, etc.) necessary to perform the one or more corrective measures, the mobile rescue center may automatically generate route instructions and/or driving instructions to the safety location where AV 105 is located and/or expected to be located.

Alternatively, in an instance the current resources associated with the operational subsystem (i.e., implemented by mobile rescue center 110) are not capable of performing the one or more corrective measures, the operational server may cause a supplementary signal to be provided. For example, in an instance the mobile rescue center 110 is not equipped with the necessary resources to perform the one or more corrective measures, a supplementary signal may be provided. The supplementary signal may be provided to one or more nearby operational subsystems, such as one or more other mobile rescue centers 110, a rescue center 120, or a central operation server. The supplementary signal may indicate the mobile rescue center is not equipped to perform the one or more corrective measures and may further indicate the one or more corrective measures required. In some embodiments, in an instance the mobile rescue center 110 is equipped with resources which may partially satisfy the one or more corrective measures, the supplementary signal may provide an indication of the remaining corrective measures which need to be addressed. For example, if the one or more corrective measures indicate a driver is needed and a replacement camera is needed and the mobile rescue center 110 is equipped with a driver but not a replacement camera, the supplementary signal may indicate a remaining corrective measure of a replacement camera.

In some embodiments the operational subsystem 1500 may cause one or more rescue vehicles to be dispatched to a safety location associated with the safety maneuver to be performed by AV 105. For example, if the operational subsystem is implemented by rescue center 120, the operational subsystem 1500 may dispatch one or more rescue vehicles, such as one or more mobile rescue centers, to the safety location. The one or more dispatched rescue vehicles may be selected by the operational subsystem 1500 based at least in part on the resources associated with the rescue vehicle and the one or more determined corrective measures. Furthermore, the operational subsystem 1500 may dispatch one or more rescue vehicles based at least in part on a safety location (as discussed below) associated with the AV 105. For example, the operational subsystem 1500 may dispatch one or more rescue vehicles configured with the resources to at least partially satisfy the one or more corrective measures and that is closest (i.e., closest by distance, time, etc.) to the safety location of the AV 105.

As shown in step/operation 705, an apparatus, such as operational subsystem 1500, may include means such as processor 1502, memory 1504, network interface 1506, and/or the like for determining a time window and safety location for which to perform a safety maneuver. In some embodiments, the safety location is a designated emergency lane of a road segment. In some embodiments, the safety location is a designated rescue center. The operational subsystem 1500 may be configured to determine the time window and/or safety location in a similar manner as described above with respect to step/operation 606.

As shown in step/operation 706, an apparatus, such as operational subsystem 1500, may include means such as processor 1502, memory 1504, network interface 1506, and/or the like for causing an instruction signal to be provided to the AV 105. The instruction signal may be indicative of instructions for the AV 105 to perform a safety maneuver. In some embodiments, the safety maneuver may include transitioning the AV 105 to a stop at the safety location. The instruction signal may further include a time window and/or safety location which pertain to the safety maneuver. In some embodiments, the safety location is a designated emergency lane of a road segment. In some embodiments, the safety location is a designated rescue center. In some embodiments, the instruction signal may cause the AV 105 to perform the safety maneuver within the time window and at the safety location.

As shown in step/operation 707, an apparatus, such as operational subsystem 1500, may include means such as processor 1502, and/or the like for determining one or more uncertainty areas of a road segment. In some embodiments, the one or more uncertainty areas may be determined based at least in part on the one or more signals from the AV 105. In some embodiments, the one or more uncertainty areas may be determined based at least in part on the rescue signal received from the AV 105. In some embodiments, the operational subsystem 1500 may determine an uncertainty area in the event a safety abnormal operational state was determined for a particular area. For example, if a foreign object is detected on the road segment such that a safety abnormal operational state type is determined with respect to AV 105, then the location where the foreign object was detected may be determined as an uncertainty area. The operational subsystem 1500 may be configured to extend the uncertainty area to encompass a particular geographic region. The encompassed geographic region corresponding to an uncertainty area may be based at least in part on the map database 1758. For example, an uncertainty area may be determined for the length of road stretching between a preceding exit ramp and a following on-ramp corresponding to the road segment. As such, the uncertainty area for a road segment may be avoided by taking the on-ramp prior to encountering the uncertainty area and stretch until the next entrance point of the on-ramp leading back onto the road segment.

As shown in step/operation 708, an apparatus, such as operational subsystem 1500, may include means such as processor 1502, network interface 1506, and/or the like for causing one or more rerouting instructions to be provided to one or more other AVs. The operational subsystem 1500 may be configured to determine if the route for one or more additional AVs includes the one or more uncertainty area. In the event an additional AV route does include the uncertainty area, the operational subsystem 1500 may cause rerouting instructions to be provided to the one or more additional AVs such that the uncertainty area may be avoided.

Advantageously, embodiments of the present invention contemplate the predictive detection of abnormal operational states for AVs. In doing so, AVs may proactively perform safety maneuvers in instances where requires. Furthermore, the detection of abnormal operational states for the AV may further identify a type of abnormal operational state such that a safety location and time window for which to perform the safety maneuver may be dynamically determined based at least in part on the circumstances of the abnormal operational state. Additionally, corrective measures required in order for the AV to return to a normal operational state may be determined such that corrective measures may automatically be determined by the control subsystem of the AV and/or the operational subsystem, thereby conserving computational and manual resources which would otherwise be dedicated to diagnosing the issue.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims.

## Claims

1. A control subsystem (1400) of an autonomous vehicle AV (105), the control subsystem comprising processing circuitry (1402) configured to:
receive one or more signals from one or more sensors (1646) carried by the AV;
evaluate signal characteristics of the one or more signals to identify one or more signals having signal characteristics indicative of an abnormal operational state;
in an instance one or more abnormal operational states are identified, cause a rescue signal to be provided; and
perform a safety maneuver within a time window with respect to a safety location,
wherein the processing circuitry is further configured to:
process the one or more signals from the one or more sensors, using one or more image processing models, to determine one or more detected objects on a road segment;
compare the one or more detected objects to one or more expected objects, wherein the one or more expected objects are based at least in part on a stored operational defined domain;
in an instance one or more discrepancies are detected between the one or more detected objects and the one or more expected objects, determine whether the one or more discrepancies are defined in the stored operational defined domain as relating to an abnormal operational state;
and
in an instance the one or more discrepancies relate to an abnormal operational state, identify the abnormal operational state.

2. The control subsystem of claim 1, wherein the processing circuitry is further configured to:
determine one or more corrective measures based at least in part on a type of abnormal operational state, wherein the rescue signal comprises an indication of the one or more corrective measures, and optionally wherein the one or more corrective measures are indicative of hardware associated with the AV in need of replacement.

3. The control subsystem of any preceding claim, wherein the processing circuitry is further configured to:
determine the time window and safety location of the safety maneuver based at least in part on the type of abnormal operational state.

4. The control subsystem of any of claims 1 to 3, wherein the processing circuitry is further configured to:
receive an instruction signal, wherein the instruction signal is indicative of one or more of the time window and safety location of the safety maneuver.

5. The control subsystem of any preceding claim, wherein the safety maneuver comprises transitioning the AV to a stop at the safety location, and/or optionally wherein the safety location is a designated emergency lane of a road segment or a designated rescue center.

6. A method comprising:
receiving one or more signals from an autonomous vehicle AV (105);
evaluating signal characteristics of the one or more signals to identify one or more signals having signals characteristics indicative of an abnormal operational state of the AV;
in an instance one or more abnormal operational states are identified, causing an instruction signal to be provided to the AV, wherein i) the instruction signal is indicative of instructions for the AV to perform a safety maneuver and ii) the instruction signal further comprises one or more of a time window or a safety location pertaining to the safety maneuver,
wherein the one or more signals are received from one or more sensors (1646) carried by the AV.
further comprising:
processing the one or more signals from the one or more sensors, using one or more image processing models, to determine one or more detected objects on a road segment;
comparing the one or more detected objects to one or more expected objects, wherein the one or more expected objects are based at least in part on a stored operational defined domain;
in an instance one or more discrepancies are detected between the one or more detected objects and the one or more expected objects, determining whether the one or more discrepancies are defined in the stored operational defined domain as relating to an abnormal operational state; and
in an instance the one or more discrepancies relate to an abnormal operational state, identifying the abnormal operational state.

7. The method of claim 6, further comprising:
determining one or more corrective measures to be taken with respect to the AV based at least in part on a type of abnormal operational state;
determining whether current resources associated with an operational subsystem are capable of performing the one or more corrective measures; and
in an instance the current resources associated with the operational subsystem are not capable of performing the one or more corrective measures, causing a supplementary corrective measure signal to be provided.

8. The method of claim 6 or 7, further comprising:
determining one or more corrective measures to be taken with respect to the AV based at least in part on a type of abnormal operational state; and
cause one or more rescue vehicles to be dispatched to a safety location associated with the safety maneuver to be taken by the AV based at least in part on the one or more determined corrective measures.

9. The method of any of claims 6 to 8, wherein determination of the time window and the safety location of the safety maneuver is based at least in part on the type of abnormal operational state, and/or optionally wherein the one or more corrective measures are indicative of hardware associated with the AV in need of replacement.

10. The method of any of claims 6 to 9, wherein the safety maneuver comprises transitioning the AV to a stop at the safety location, and/or optionally wherein the safety location is a designated emergency lane of a road segment or a designated rescue center.

11. The method of any of claims 6 to 10, further comprising:
determining one or more uncertainty areas of a road segment based at least in part on the one or more signals from the AV or a rescue signal received from the AV; and
causing one or more rerouting instructions to be provided to one or more other AVs, wherein the one or more other AVs are each associated with routes associated with the one or more uncertainty areas of the road segment.

## Patentansprüche

1. Steuerungs-Subsystem (1400) eines autonomen Fahrzeugs AV (105), wobei das Steuerungs-Subsystem Folgendes umfasst:
eine Verarbeitungsschaltung (1402), die für Folgendes ausgebildet ist:
Empfangen eines oder mehrerer Signale von einem oder mehreren Sensoren (1646), die vom AV getragen werden;
Auswerten der Signalcharakteristiken des einen oder der mehreren Signale, um ein oder mehrere Signale zu identifizieren, deren Signalcharakteristiken auf einen abnormalen Betriebszustand hinweisen;
in einem Fall, in dem ein oder mehrere abnormale Betriebszustände identifiziert werden, Veranlassen, dass ein Rettungssignal bereitgestellt wird; und
Durchführen eines Sicherheitsmanövers innerhalb eines Zeitfensters in Bezug auf einen Sicherheitsort,
wobei die Verarbeitungsschaltung ferner für Folgendes ausgebildet ist:
Verarbeiten des einen oder der mehreren Signale von dem einen oder den mehreren Sensoren, wobei ein oder mehrere Bildverarbeitungsmodelle verwendet werden, um ein oder mehrere erkannte Objekte auf einem Straßenabschnitt zu bestimmen;
Vergleichen des einen oder der mehreren erkannten Objekte mit einem oder mehreren erwarteten Objekten, wobei das eine oder die mehreren erwarteten Objekte zumindest teilweise auf einem gespeicherten betriebstechnisch definierten Bereich beruhen;
in einem Fall, in dem eine oder mehrere Abweichungen zwischen dem einen oder den mehreren erkannten Objekten und dem einen oder den mehreren erwarteten Objekten erkannt werden, Bestimmen, ob die eine oder die mehreren Abweichungen in dem gespeicherten betriebstechnisch definierten Bereich als auf einen abnormalen Betriebszustand bezogen definiert sind; und
in einem Fall, in dem sich die eine oder mehreren Abweichungen auf einen abnormalen Betriebszustand beziehen, Identifizieren des abnormalen Betriebszustands.

2. Steuerungs-Subsystem nach Anspruch 1, wobei die Verarbeitungsschaltung ferner für Folgendes ausgebildet ist:
Bestimmen einer oder mehrerer Korrekturmaßnahmen, die zumindest teilweise auf einer Art von abnormalem Betriebszustand beruhen, wobei das Rettungssignal eine Anzeige der einen oder mehreren Korrekturmaßnahmen umfasst, und wobei optional die eine oder mehreren Korrekturmaßnahmen eine Anzeige der mit dem AV verbundenen Hardware sind, die ausgetauscht werden muss.

3. Steuerungs-Subsystem nach einem der vorhergehenden Ansprüche, wobei die Verarbeitungsschaltung ferner für Folgendes ausgebildet ist:
Bestimmen des Zeitfensters und des Sicherheitsortes des Sicherheitsmanövers zumindest teilweise auf der Grundlage der Art des abnormalen Betriebszustands.

4. Steuerungs-Subsystem nach einem der Ansprüche 1 bis 3, wobei die Verarbeitungsschaltung ferner für Folgendes ausgebildet ist:
Empfangen eines Anweisungssignals, wobei das Anweisungssignal einen oder mehrere Hinweise auf das Zeitfenster und den Sicherheitsort des Sicherheitsmanövers enthält.

5. Steuerungs-Subsystem nach einem der vorhergehenden Ansprüche, wobei das Sicherheitsmanöver den Übergang des AV zum Anhalten am Sicherheitsort umfasst, und/oder optional, wobei der Sicherheitsort ein ausgewiesener Pannenstreifen eines Straßenabschnitts oder ein ausgewiesenes Rettungszentrum ist.

6. Verfahren, das Folgendes umfasst:
Empfangen eines oder mehrerer Signale von einem autonomen Fahrzeug AV (105);
Auswerten der Signalcharakteristiken des einen oder der mehreren Signale, um ein oder mehrere Signale zu identifizieren, deren Signalcharakteristiken auf einen abnormalen Betriebszustand des AV hinweisen;
in einem Fall, in dem ein oder mehrere abnormale Betriebszustände identifiziert werden, Veranlassen, dass ein Anweisungssignal an das AV bereitgestellt wird, wobei i) das Anweisungssignal Anweisungen für das AV zur Durchführung eines Sicherheitsmanövers anzeigt und ii) das Anweisungssignal ferner eines oder mehrere von einem Zeitfenster oder einem Sicherheitsort in Bezug auf das Sicherheitsmanöver umfasst,
wobei das eine oder die mehreren Signale von einem oder mehreren Sensoren (1646) empfangen werden, die von dem AV getragen werden, ferner umfassend:
Verarbeiten des einen oder der mehreren Signale von dem einen oder den mehreren Sensoren, wobei ein oder mehrere Bildverarbeitungsmodelle verwendet werden, um ein oder mehrere erkannte Objekte auf einem Straßenabschnitt zu bestimmen;
Vergleichen des einen oder der mehreren erkannten Objekte mit einem oder mehreren erwarteten Objekten, wobei das eine oder die mehreren erwarteten Objekte zumindest teilweise auf einem gespeicherten betriebstechnisch definierten Bereich beruhen;
in einem Fall, in dem eine oder mehrere Abweichungen zwischen dem einen oder den mehreren erkannten Objekten und dem einen oder den mehreren erwarteten Objekten erkannt werden, Bestimmen, ob die eine oder die mehreren Abweichungen in dem gespeicherten betriebstechnisch definierten Bereich als auf einen abnormalen Betriebszustand bezogen definiert sind; und
in einem Fall, in dem sich die eine oder mehreren Abweichungen auf einen abnormalen Betriebszustand beziehen, Identifizieren des abnormalen Betriebszustands.

7. Verfahren nach Anspruch 6, das ferner Folgendes beinhaltet:
Bestimmen einer oder mehrerer Korrekturmaßnahmen, die in Bezug auf das AV zu ergreifen sind, zumindest teilweise auf der Grundlage einer Art von abnormalem Betriebszustand;
Bestimmen, ob die einem betriebstechnischen Subsystem zugeordneten aktuellen Ressourcen in der Lage sind, die eine oder mehrere Korrekturmaßnahmen durchzuführen; und
in einem Fall, in dem die mit dem betriebstechnischen Subsystem verbundenen aktuellen Ressourcen nicht in der Lage sind, die eine oder mehrere Korrekturmaßnahmen durchzuführen, veranlassen, dass ein zusätzliches Korrekturmaßnahmensignal bereitgestellt wird.

8. Verfahren nach Anspruch 6 oder 7, das ferner Folgendes beinhaltet:
Bestimmen einer oder mehrerer Korrekturmaßnahmen, die in Bezug auf das AV zu ergreifen sind, zumindest teilweise auf der Grundlage einer Art von abnormalem Betriebszustand; und
Veranlassen, dass ein oder mehrere Rettungsfahrzeuge zu einem Sicherheitsort entsandt werden, der mit dem vom AV durchzuführenden Sicherheitsmanöver verbunden ist, das zumindest teilweise auf der einen oder den mehreren bestimmten Korrekturmaßnahmen beruht.

9. Verfahren nach einem der Ansprüche 6 bis 8, wobei die Bestimmung des Zeitfensters und des Sicherheitsorts des Sicherheitsmanövers zumindest teilweise auf der Art des abnormalen Betriebszustands basiert und/oder optional, wobei die eine oder die mehreren Korrekturmaßnahmen einen Hinweis auf auszutauschende, mit dem AV verbundene Hardware geben.

10. Verfahren nach einem der Ansprüche 6 bis 9, wobei das Sicherheitsmanöver den Übergang des AV zum Anhalten am Sicherheitsort umfasst, und/oder optional, wobei der Sicherheitsort ein ausgewiesener Pannenstreifen eines Straßenabschnitts oder ein ausgewiesenes Rettungszentrum ist.

11. Verfahren nach einem der Ansprüche 6 bis 10, das ferner Folgendes umfasst:
Bestimmen eines oder mehrerer Unsicherheitsbereiche eines Straßenabschnitts zumindest teilweise auf der Grundlage des einen oder der mehreren Signale von dem AV oder eines von dem AV empfangenen Rettungssignals; und
Veranlassen, dass eine oder mehrere Umleitungsanweisungen an ein oder mehrere andere AVs bereitgestellt werden, wobei das eine oder die mehreren anderen AVs jeweils mit Routen verbunden sind, die mit dem einen oder den mehreren Unsicherheitsbereichen des Straßenabschnitts verbunden sind.

## Revendications

1. Sous-système de commande (1400) d'un véhicule autonome AV (105), le sous-système de commande comprenant :
des circuits de traitement (1402) configurés pour :
recevoir un ou plusieurs signaux provenant d'un ou plusieurs capteurs (1646) portés par le véhicule autonome ;
évaluer les caractéristiques de signal d'un ou de plusieurs signaux pour identifier un ou plusieurs signaux ayant des caractéristiques de signal indiquant un état opérationnel anormal ;
dans le cas où un ou plusieurs états opérationnels anormaux sont identifiés, provoquer l'émission d'un signal de sauvetage ; et
effectuer une manoeuvre de sécurité dans une fenêtre temporelle par rapport à un emplacement de sécurité,
les circuits de traitement étant en outre configurés pour :
traiter les un ou plusieurs signaux provenant des un ou plusieurs capteurs, à l'aide d'un ou de plusieurs modèles de traitement d'image, afin de déterminer un ou plusieurs objets détectés sur un segment de route ;
comparer les un ou plusieurs objets détectés à un ou plusieurs objets attendus, les un ou plusieurs objets attendus étant basés au moins en partie sur un domaine opérationnel défini stocké ;
dans le cas où un ou plusieurs écarts sont détectés entre les un ou plusieurs objets détectés et les un ou plusieurs objets attendus, déterminer si les un ou plusieurs écarts sont définis dans le domaine opérationnel stocké comme étant liés à un état opérationnel anormal ; et
dans le cas où les un ou plusieurs écarts sont liés à un état opérationnel anormal, identifier l'état opérationnel anormal.

2. Sous-système de commande selon la revendication 1, dans lequel les circuits de traitement sont en outre configurés pour :
déterminer une ou plusieurs mesures correctives basées au moins en partie sur un type d'état opérationnel anormal, où le signal de sauvetage comprend une indication des une ou plusieurs mesures correctives, et éventuellement, où les une ou plusieurs mesures correctives sont indicatives du matériel associé à l'AV et qui a besoin d'être remplacé.

3. Sous-système de commande selon l'une quelconque des revendications précédentes, dans lequel les circuits de traitement sont en outre configurés pour :
déterminer la fenêtre temporelle et l'emplacement de sécurité de la manoeuvre de sécurité sur la base, au moins en partie, du type d'état opérationnel anormal.

4. Sous-système de commande selon l'une quelconque des revendications 1 à 3, dans lequel les circuits de traitement sont en outre configurés pour :
recevoir un signal d'instruction, le signal d'instruction étant indicatif d'un ou de plusieurs éléments parmi la fenêtre temporelle et l'emplacement de sécurité de la manoeuvre de sécurité.

5. Sous-système de commande selon l'une quelconque des revendications précédentes, dans lequel la manoeuvre de sécurité comprend la transition de l'AV à un arrêt à l'emplacement de sécurité et/ou, éventuellement, dans lequel l'emplacement de sécurité est une voie d'urgence désignée d'un segment de route ou un centre de secours désigné.

6. Procédé comprenant :
la réception d'un ou plusieurs signaux en provenance d'un véhicule autonome AV (105) ;
l'évaluation des caractéristiques de signal des un ou plusieurs signaux pour identifier un ou plusieurs signaux ayant des caractéristiques de signal indicatives d'un état opérationnel anormal du véhicule autonome, AV ;
dans un cas où un ou plusieurs états opérationnels anormaux sont identifiés, la fourniture d'un signal d'instruction à l'AV, où i) le signal d'instruction est indicatif d'instructions pour que l'AV effectue une manoeuvre de sécurité et ii) le signal d'instruction comprend en outre un ou plusieurs éléments parmi une fenêtre temporelle ou un emplacement de sécurité relatifs à la manoeuvre de sécurité,
dans lequel les un ou plusieurs signaux sont reçus d'un ou plusieurs capteurs (1646) portés par le véhicule autonome, AV, le procédé comprenant en outre :
le traitement des un ou plusieurs signaux provenant des un ou plusieurs capteurs, à l'aide d'un ou de plusieurs modèles de traitement d'image, afin de déterminer un ou plusieurs objets détectés sur un segment de route ;
la comparaison des un ou plusieurs objets détectés aux un ou plusieurs objets attendus, les un ou plusieurs objets attendus étant basés, au moins en partie, sur un domaine opérationnel défini stocké ;
dans le cas où un ou plusieurs écarts sont détectés entre les un ou plusieurs objets détectés et les un ou plusieurs objets attendus, la détermination du fait que les un ou plusieurs écarts sont définis ou non dans le domaine opérationnel stocké comme étant liés à un état opérationnel anormal ; et
dans le cas où les un ou plusieurs écarts sont liés à un état opérationnel anormal, l'identification de l'état opérationnel anormal.

7. Procédé selon la revendication 6, comprenant en outre :
la détermination d'une ou plusieurs mesures correctives à prendre à l'égard de l'AV, sur la base, au moins en partie, d'un type d'état opérationnel anormal ;
la détermination du fait que les ressources courantes associées à un sous-système opérationnel sont ou non capables d'exécuter les une ou plusieurs mesures correctives ; et
dans le cas où les ressources courantes associées au sous-système opérationnel ne sont pas en mesure d'exécuter les une ou plusieurs mesures correctives, l'émission d'un signal de mesure corrective supplémentaire.

8. Procédé selon la revendication 6 ou la revendication 7, comprenant en outre :
la détermination d'une ou plusieurs mesures correctives à prendre à l'égard de l'AV, sur la base, au moins en partie, d'un type d'état opérationnel anormal ; et
l'envoi d'un ou de plusieurs véhicules de secours vers un emplacement de sécurité associé à la manoeuvre de sécurité à effectuer par l'AV sur la base, au moins en partie, d'une ou de plusieurs mesures correctives déterminées.

9. Procédé selon l'une quelconque des revendications 6 à 8, dans lequel la détermination de la fenêtre temporelle et de l'emplacement de sécurité de la manoeuvre de sécurité est basée, au moins en partie, sur le type d'état opérationnel anormal et/ou, éventuellement, dans lequel les une ou plusieurs mesures correctives sont indicatives du matériel associé à l'AV et qui a besoin d'être remplacé.

10. Procédé selon l'une quelconque des revendications 6 à 9, dans lequel la manœuvre de sécurité comprend la transition de l'AV vers un arrêt à l'emplacement de sécurité et/ou, éventuellement, dans lequel l'emplacement de sécurité est une voie d'urgence désignée d'un segment de route ou un centre de secours désigné.

11. Procédé selon l'une quelconque des revendications 6 à 10, comprenant en outre :
la détermination d'une ou plusieurs zones d'incertitude d'un segment de route sur la base, au moins en partie, des un ou plusieurs signaux de l'AV ou sur un signal de sauvetage reçu de l'AV ; et
la fourniture d'une ou plusieurs instructions de reroutage à un ou plusieurs autres AV, les un ou plusieurs autres AV étant chacun associés à des itinéraires associés aux une ou plusieurs zones d'incertitude du segment de route.
